# EUROPÄISCHE PATENTSCHRIFT

(11) **EP 2 057 022 B1**
(45) Veröffentlichungstag und Bekanntmachung des Hinweises auf die Patenterteilung: **10.09.2014**
(21) Anmeldenummer: 07787259.6
(22) Anmeldetag: 09.07.2007
(51) Int. Cl.: B60C 23/04

(54) **REIFENSENSORMODUL UND VERFAHREN ZU SEINER HERSTELLUNG**
TYRE SENSOR MODULE AND METHOD FOR ITS PRODUCTION
MODULE DE SONDE POUR BANDAGE DE ROUE ET PROCÉDÉ POUR SA FABRICATION

(30) Priorität: 21.08.2006 DE 102006039113
(43) Veröffentlichungstag der Anmeldung: 13.05.2009
(73) Patentinhaber: Robert Bosch GmbH, 70442 Stuttgart (DE)
(72) Erfinder: MUCHOW, Joerg, 72764 Reutlingen (DE); PANNEK, Thorsten, 70176 Stuttgart (DE); KLETT, Gustav, 72116 Moessingen (DE); BUCK, Thomas, 71732 Tamm (DE); KNIES, Sonja, 71229 Leonberg (DE); SCHOLZ, Ulrike, 70825 Korntal (DE)
(86) Internationale Anmeldenummer: PCT/EP2007/056983
(87) Internationale Veröffentlichungsnummer: WO 2008/022842

(56) Entgegenhaltungen:
- DE-A1- 10 142 354
- JP-A- 2004 330 842
- US-B1- 6 580 363
- US-B1- 6 885 291

## Beschreibung

### Stand der Technik

Reifensensoren werden insbesondere zur Messung des Reifendrucks, d.h. als so genannte Reifendruckkontrollsysteme (TPMS) verwendet. Sie werden üblicherweise als Sensormodule an der Felge oder am Ventil des Reifens angebracht und übertragen ihre Daten drahtlos mit Hilfe einer Antenne an eine Empfangseinrichtung des Fahrzeuges, die sie zu einem zentralen Steuergerät des Fahrzeuges weiterleitet.

Die Antenne ist im Allgemeinen als Draht außerhalb des Sensors vorgesehen. Bei der Montage des Sensormoduls im Reifen durch z.B. Einvulkanisieren ist die Antenne daher ihrer Konstruktion entsprechend auszurichten, was entsprechend aufwendige Montageschritte zur Folge hat.

Aus der Schrift US 6,580,363 B1 ist ein Reifendrucküberwachungssystem bekannt, bei dem eine Antenne zum Senden und Empfangen von Reifendruckdaten in einem Gehäuse untergebracht ist.

Aus der Schrift JP 2004 330842 A ist bekannt, eine Antenne in die Abdeckung eines Reifendrucksensors zu integrieren, um eine Dämpfung der elektromagnetischen Wellen durch das Sensorgehäuse zu erreichen.

Aus der Schrift US6,885,291 B1, Figuren 4A und 4B, ist eine, in einem Gehäuseinnenraum angeordnete, rotationssymmetrische Antenne bekannt.

### Offenbarung der Erfindung

Erfindungsgemäß ist die Antenne des Reifensensormoduls in oder an dem Gehäuse des Reifensensormoduls vorgesehen, d.h. sie ist nicht in dem Gehäuseinnenraum oder außerhalb des Gehäuses vorgesehen, sondern in dem Gehäusematerial vorgesehen, z. B. integriert, oder an einer Gehäuseseite ausgebildet. Sie kann insbesondere an der Gehäuseinnenseite ausgebildet sein.

Somit kann die Antenne nicht beim Einvulkanisieren verformt oder in ihrer Ausrichtung verändert werden, wie es bei Anordnungen außerhalb des Gehäuses möglich ist. Weiterhin nimmt die Antenne auch keinen Bauraum im Gehäuseinnenraum ein, in dem der Schaltungsträger mit zumindest dem Sensorelement und gegebenenfalls weiteren Bauelementen angebracht wird. Es steht somit bei einer gegebenen Gehäusegröße ein größerer Gehäuseinnenraum als Sensorbauraum zur Verfügung.

Die Antenne kann dennoch mit großer Antennenlänge ausgebildet werden, indem sie sich mit entsprechender Länge in oder an dem Gehäuse erstreckt.

Gemäß einer bevorzugten Ausführungsform ist zumindest das Gehäuse, vorteilhafterweise sowohl Gehäuse als auch Schaltungsträger, rotationssymmetrisch ausgebildet. Die Antenne kann hierbei schraubenförmig bzw. helisch in oder an dem Gehäuse verlaufen und somit eine große Antennenlänge einnehmen. Bei einer derartigen Helix-Form sind die Antenneneigenschaften, insbesondere die Abstrahlcharakteristik, in der Ebene senkrecht zur Schraubenachse im Wesentlichen isotrop bzw. gleichmäßig.

Das erfindungsgemäße Reifensensormodul kann somit ohne Ausrichtung in dem Reifen angebracht werden; es kann z.B. im Gummimaterial, insbesondere im Bereich der Lauffläche einvulkanisiert werden.

Die Antenne kann hierbei gemäß einer ersten alternativen Ausführungsform an einer Gehäuseseite, vorzugsweise der Gehäuseinnenseite, als Antennen-Metallschicht ausgebildet werden. Hierzu wird vorteilhafterweise ein Laser-direkt-Strukturierungsverfahren (LDS) verwendet, wozu zumindest ein Bereich des Gehäuses aus einem laseraktivierbaren Thermoplast hergestellt ist.

Bei einem derartigen Herstellungsverfahren ergibt sich der wesentliche Vorteil, dass die Geometrie der Antenne flexibel an die verschiedenen Applikationen angepasst werden kann. Bei dem Laser-Direkt-Strukturierungsverfahren wird ein schreibendes Belichtungsverfahren verwendet, so dass für unterschiedliche Varianten lediglich der Datensatz, z. B. ein CAD-CAM-Datensatz der Lasersteuerung, zu ändern ist.

Gemäß einer hierzu alternativen zweiten Ausführungsform kann die Antenne als metallisches Einlegeteil in das Spritzgusswerkzeug eingelegt und dann vom Gehäusekunststoff umspritzt werden. Hierdurch ergibt sich ein einfaches und kostengünstiges Herstellungsverfahren.

Die Kontaktierung des Schaltungsträgers mit der Antenne kann mittels einer leitfähigen Klebstoffverbindung zwischen Schaltungsträger und Gehäuse erfolgen, wobei die Einklebung eine sichere Aufnahme des Schaltungsträgers im Gehäuse ermöglicht. Anstelle der leitfähigen Klebstoffverbindungen sind auch Druckkontakte, Klemm- oder Einpressverbindungen möglich, so dass keine Klebung bei der Endmontage der Leiterplatte im Gehäuse erforderlich ist. Weiterhin ist auch eine kontaktfreie, insbesondere induktive oder kapazitive Verbindung der Antenne mit dem Schaltungsträger möglich, so dass keine aufwendige elektrische Kontaktierung zwischen dem Schaltungsträger und dem Sensorgehäuse erforderlich ist. Hierdurch wird die Montage des Schaltungsträgers in dem Gehäuse deutlich vereinfacht.

Der Schaltungsträger bzw. das Substrat kann insbesondere eine Leiterplatte sein, auf der neben dem Sensorelement bzw. Sensor-IC noch weitere Bauelemente, insbesondere ein Auswerte- und Steuer-ASIC sowie ein RF-ASIC angebracht sein können. Derartige Funktionen können jedoch grundsätzlich auch ganz oder teilweise auf dem Sensor-IC integriert sein.

Das erfindungsgemäße Reifensensormodul kann grundsätzlich sämtliche Messanwendungen von Reifensensoren verwirklichen, insbesondere zur Messung des (Reifeninnen-) Drucks, der Temperatur oder Beschleunigungen bzw. Vibrationen. Die verschiedenen Funktionen können bei Verwendung mehrerer Sensorelemente auch kombiniert werden.

### Kurze Beschreibung der Zeichnungen

- Fig. 1: zeigt ein Reifensensormodul bei geöffnetem Gehäuse in perspektivischer Ansicht;
- Fig. 2: zeigt eine perspektivische Ansicht eines Gehäuseteils mit Antenne gemäß einer ersten Ausführungsform;
- Fig. 3: zeigt einen Querschnitt durch das Reifensensormodul der ersten Ausführungsform mit beschichteter Antenne;
- Fig. 4: zeigt einen Querschnitt durch das Reifensensormodul einer zweiten Ausführungsform mit eingegossener Antenne
- Fig. 5: zeigt ein Flussdiagramm der erfindungsgemäßen Herstellungsverfahren gemäß der beiden Ausführungsformen.

### Ausführungsformen der Erfindung

Ein erfindungsgemäßes Reifensensormodul 1 weist ein Gehäuse 2 mit einem oberen Gehäuseteil 2a und einem unteren Gehäuseteil 2b auf, die in einer Schweißverbindung 3 miteinander verbunden sind und einen Gehäuseraum 4 zwischen sich definieren. Zumindest für Druckmessungen ist das Gehäuse 2 nicht hermetisch dicht ausgebildet.

In dem Gehäuseraum 4 ist ein Schaltungsträger 6, z.B. eine Leiterplatte 6 oder auch ein keramisches Substrat, aufgenommen, auf dem ein Sensorelement 7 (Sensor-IC), sowie weitere Bauelemente angebracht sind, z.B. ein Auswerte- und Steuer-ASIC 8 zur Aufnahme der Messwerte des Sensorelementes 7, gegebenenfalls auch zur Auswertung dieser Messsignale, ein RF- ASIC 9 und ein Oszillator 10. der Schaltungsträger 6 kann z. B. auf eine Schulter 11 des Gehäuseteils 2a aufgesetzt werden.

Das Sensorelement 7 kann zur Messung unterschiedlicher Messgrößen eingesetzt werden, insbesondere zur Messung des Reifendrucks, weiterhin zur Messung der Innentemperatur im Reifen oder von Beschleunigungen bzw. Vibrationen. Das Reifensensormodul 1 kann insbesondere auch mehrere Sensorelemente 7 zur Messung mehrerer derartiger Zustandsgrößen bzw. Messwerte aufweisen.

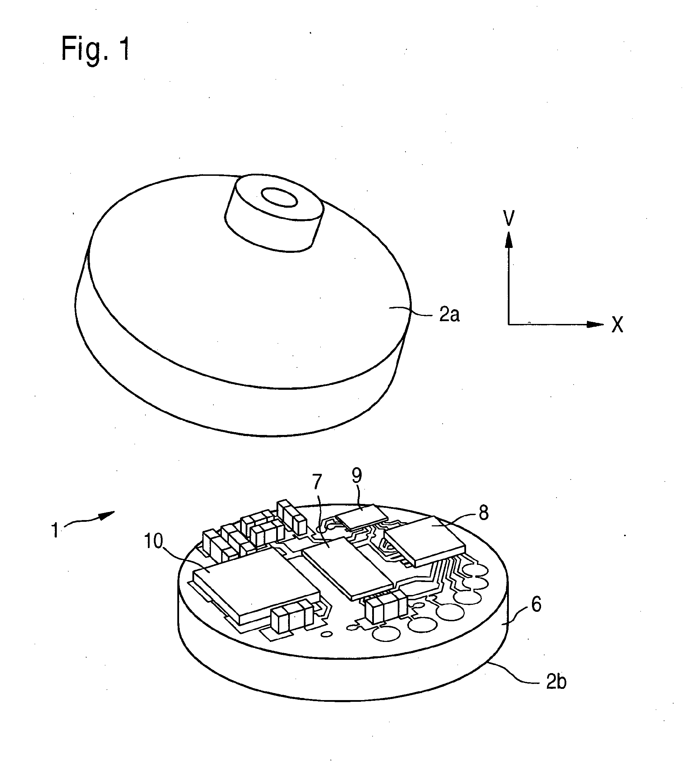

Eine Antenne 14, 24 ist erfindungsgemäß in oder an dem Gehäuse 2 ausgebildet, d.h. nicht im Gehäuseinnenraum 4 oder außerhalb des Gehäuses 2, sondern im Gehäusematerial oder an der Innen- oder Außenseite. Gemäß der ersten Ausführungsform der Figuren 1 bis 3 ist die Antenne 14 als Metallschicht an der Innenseite 16 des Gehäuses 2, z.B. des ersten Gehäuseteils 2a, ausgebildet. Hierzu ist das Gehäuse 2 - oder ein Gehäuseteil 2a - aus einem laseraktivierbaren Kunststoff, insbesondere Thermoplast hergestellt, z.B. aus Polymertypen LCP, PA6/6T oder PBT. Derartige Kunststoffe sind mit metallorganischen Substanzen dotiert, die nach Freilegung durch den Laser als aktivierte Keime eine nachfolgende stromlose Metallisierung ermöglichen. Die metallorganische Substanz kann hierbei im Kunststoff gelöst oder feinstdispergiert vorliegen; sie kann z. B. eine Chelat-Komplex-Verbindung eines Edelmetalls sein, z. B. auf Palladium- oder Kupferbasis. Bei der Laserstrukturierung wird weiterhin eine Oberflächenstruktur an der Grenzfläche Kunststoff-Metall erzeugt, die für eine hohe Haftung bei der nachfolgenden nasschemischen Metallbeschichtung geeignet ist.

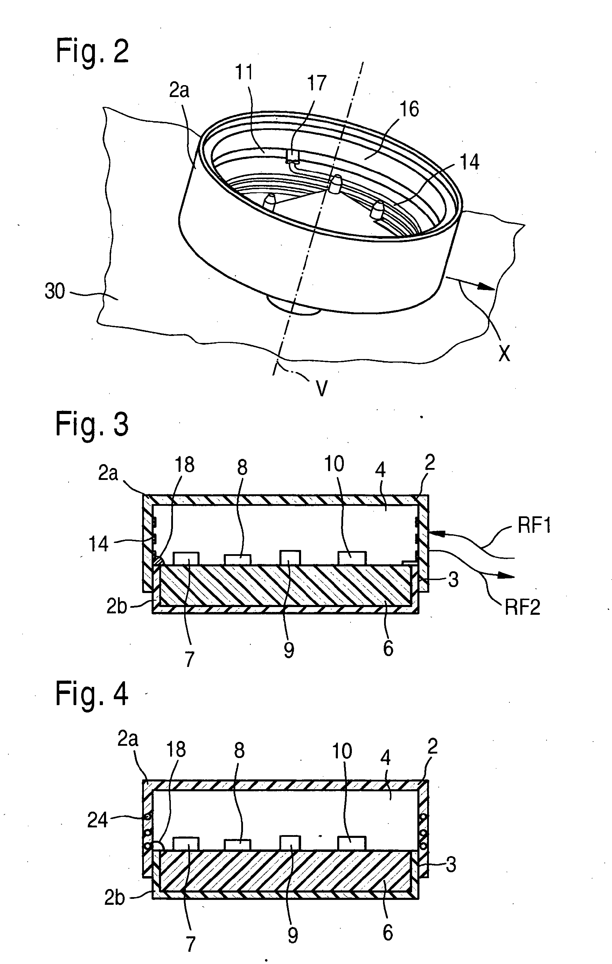

Gemäß der zweiten Ausführungsform der Fig. 4 ist die Antenne 24 als metallisches Einlegeteil 24 in ein Gehäuseteil 2a eingegossen, wozu sie bei der Herstellung in das verwendete Spritzwerkzeug eingelegt wird.

Die Antenne 14, 24 kann bei beiden Ausführungsformen insbesondere als Helix-Antenne bzw. schraubenförmige Antenne ausgebildet sein, wozu das Gehäuse 2 vorteilhafterweise zylindrisch ausgebildet ist. Somit kann eine große Antennenlänge ausgebildet werden, deren Länge sich entsprechend aus dem Innenumfang des Gehäuses 2 und der Anzahl der Windungen bzw. Wicklungen ergibt.

Die Antenne 14, 24 ist mit dem Schaltungsträger 6 in einer Antennenverbindung 18 verbunden. Hierbei sind gemäß einer Ausführungsform elektrische Kontaktierungen möglich. Eine derartige elektrische Kontaktierung kann zum einen erfolgen, indem zumindest im Bereich der Kontaktierung der Antenne 14, 24 mit dem Schaltungsträger 6 ein Leitkleber verwendet wird, d.h. der Schaltungsträger 6 ist auf der Schulter 11 des Gehäuses 2 mittels einer Klebeverbindung 12 befestigt, wobei die Klebeverbindung 12 oder ein Teilbereich der Klebeverbindung 12 elektrisch leitfähig ist und eine Kontaktierung des Schaltungsträgers 6 (bzw. eines Diepads oder Kontaktpads des Schaltungsträgers 6) mit einem Kontaktpad 17 des Gehäuses 2 bewirkt, an den die Antenne 14 oder 24 angeschlossen ist. Hierbei kann ergänzend ein Underfiller zur Erhöhung der mechanischen Stabilität unter den Schaltungsträger gebracht werden.

Alternativ hierzu sind auch Ausbildungen der Antennenverbindung 18 als Druckkontakte, Klemm- oder Einpressverbindungen möglich, so dass bei der Endmontage des Schaltungsträgers 6 in das Gehäuse 2 keine Klebeverbindung 12 erforderlich ist und die Positionierung und Befestigung des Schaltungsträgers 6 sowie Kontaktierung der Antenne 14, 24 vollständig über Klemm- und Rastmechanismen erfolgen kann.

Weiterhin kann die Antennenverbindung 18 auch kontaktlos, insbesondere induktiv oder kapazitiv ausgebildet sein, so dass die aufwendige elektrische Verbindung zwischen dem Schaltungsträger 6 und der Antenne 14, 24 entfällt.

Das Reifensensormodul 1 kann insbesondere als Transponder wirken, das über die Antenne 14, 24 Abfragesignale RF1 aufnimmt und aus Messsignalen des Sensorelementes 7 Aussendesignale RF2 bildet, die wiederum über die Antenne 14 oder 24 ausgesandt werden.

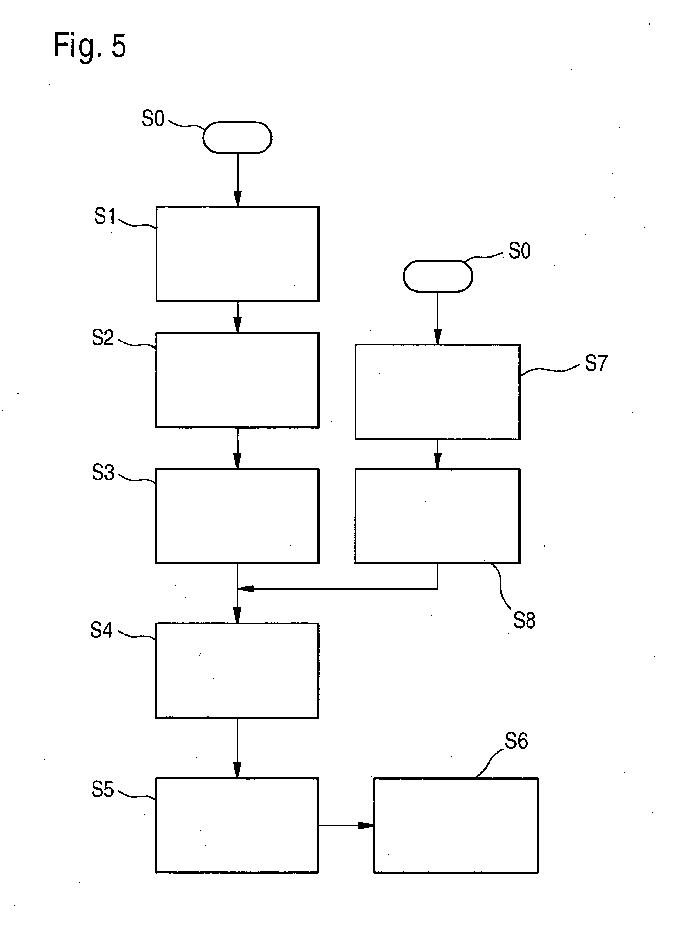

Die Herstellungsverfahren der beiden Ausführungsformen sind in Fig. 5 beschrieben. Die Herstellung gemäß der ersten Ausführungsform erfolgt, indem (nach dem Start in Schritt S0) das Gehäuse 2 bzw. ein Gehäuseteil 2a in Schritt S1 aus einem laseraktivierbaren Thermoplast spritzgegossen wird, und anschließend in Schritt S2 als erster Prozessschritt des Laser-Direkt-Strukturierungs-Verfahrens (LDS) die Innenseite 16 des Gehäuses 2 bzw. des Gehäuseteils 2a belichtet wird, woraufhin in Schritt S3 nasschemisch ein Metall z. B. Cu an den belichteten Stellen abgeschieden wird. Das Cu kann verstärkt und kann mit einem Oberfächenfinish z. B. aus chemisch Ni und Immersion-Au versehen werden. In Schritt S4 erfolgt der Einsatz des Schaltungsträgers 6 in das Gehäuse 2 bzw. den Gehäuseteil 2a, wobei auch die Kontaktierung der Antenne 14 mit dem Schaltungsträger 6 erfolgt. In Schritt S5 wird das Gehäuse durch Verschweißen der Gehäuseteile 2a, 2b verschlossen.

Gemäß der zweite Ausführungsform wird in Schritt S7 die Antenne 24 als metallisches Einlegeteil in eine Gussform bzw. Spritzgusswerkzeug gelegt, in Schritt S8 nachfolgend in das Gehäuseteil 2a eingespritzt, woraufhin wiederum gemäß Schritt S4 der Schaltungsträgers 6 in das Gehäuse 2 bzw. den Gehäuseteil 2a eingesetzt wird unter Kontaktierung der Antenne 14 mit dem Schaltungsträger 6.

Das so hergestellte Reifensensormodul 1 kann insbesondere in einem nachfolgenden Schritt S6 in das Gummimaterial eines Reifens30 einvulkanisiert werden. Da das Reifensensormodul 1 der gezeigten Ausführungsform rotationssymmetrisch ausgebildet ist und seine Antenne 14 zumindest im Wesentlichen rotationssymmetrisch ausgebildet ist, nämlich aufgrund der Helix-Form bzw. Schraubenform eine im Wesentlichen gleichmäßige Abstrahlcharakteristik in der Ebene senkrecht zur Schraubenachse aufweist, ist auch eine Anbringung des Reifensensormoduls 1 im Reifen ohne Ausrichtung in bestimmten Ebenen möglich. Das erfindungsgemäße Reifensensormodul 1 kann somit z.B. auch in der Lauffläche, z.B. im Bereich des Stahlgürtels, einvulkanisiert werden.

## Patentansprüche

1. Reifensensormodul, das aufweist:
einen Schaltungsträger (6), auf oder in dem mindestens ein Sensorelement (7) zur Messung einer Messgröße angebracht ist,
eine Antenne (14, 24) zur Aussendung von Sensorsignalen (RF2) an eine Empfangseinrichtung des Fahrzeuges, und
ein Gehäuse (2), in dessen Gehäuseinnenraum (4) der Schaltungsträger (6) aufgenommen ist,
wobei die Antenne (14, 24) in dem Gehäusematerial des Gehäuses (2) oder an einer Gehäuseseite (16) des Gehäuses (2) ausgebildet ist, **dadurch gekennzeichnet dass**
das Gehäuse (2) rotationssymmetrisch ausgebildet ist und die Antenne (14, 24) sich in Umfangsrichtung des Gehäuses (2) erstreckt.

2. Reifensensormodul nach Anspruch 1, **dadurch gekennzeichnet, dass** die Antenne (14) an der Gehäuseinnenseite (16) ausgebildet ist.

3. Reifensensormodul nach Anspruch 1 oder 2, **dadurch gekennzeichnet, dass** zumindest ein Teil des Gehäuses (2) aus einem laseraktivierbarem Kunststoff hergestellt ist und die Antenne (14) mittels eines Laser-Direkt-Strukturierungsverfahrens auf einer Gehäuseseite (16) ausgebildet ist.

4. Reifensensormodul nach einem der Ansprüche 1 bis 3, **dadurch gekennzeichnet, dass** die Antenne (14) als Antennen-Metallschicht ausgebildet ist.

5. Reifensensormodul nach Anspruch1, **dadurch gekennzeichnet, dass** die Antenne (24) als metallisches Einlegeteil in dem Gehäusematerial des Gehäuses (2) aufgenommen ist.

6. Reifensensormodul nach Anspruch 1, **dadurch gekennzeichnet, dass** die Antenne (14, 24) schraubenförmig oder Helix-förmig mit mehreren Windungen ausgebildet ist.

7. Reifensensormodul nach einem der vorherigen Ansprüche, **dadurch gekennzeichnet, dass** die Antenne (14, 24) mit dem Schaltungsträger (6) mittels einer leitfähigen Klebeverbindung (12) und/oder durch einen Druckkontakt und/oder eine Einpress- oder Klemmverbindung zwischen dem Schaltungsträger (6) und dem Gehäuse (2) kontaktiert ist.

8. Reifensensormodul nach einem der Ansprüche 1 bis 6, **dadurch gekennzeichnet, dass** der Schaltungsträger (6) mit der Antenne (14, 24) kontaktfrei mittels einer kapazitiven oder induktiven Antennenverbindung (18) verbunden ist.

9. Reifensensormodul nach einem der vorherigen Ansprüche, **dadurch gekennzeichnet, dass** auf oder in dem Schaltungsträger (6) ein oder mehrere Sensorelemente (7) zur Messung mindestens einer der folgenden Messgrößen vorgesehen sind:
Druck, Temperatur, Beschleunigung.

10. Reifensensormodul nach einem der vorherigen Ansprüche, **dadurch gekennzeichnet, dass** es als Transponder auslöst, wobei die Antenne (14, 24) zur Aufnahme von Abfragesignalen (RS1) und Aussendung von aus Messsignalen des mindestens einen Sensorelementes (7) gebildeten Sensorsignalen (RS2) vorgesehen ist.

11. Reifensensormodul nach einem der vorherigen Ansprüche, **dadurch gekennzeichnet, dass** es in das Gummimaterial (20) eines Reifens (30) eingebracht, z. B. einvulkanisiert ist, insbesondere im Bereich der Lauffläche.

12. Fahrzeugreifen, in dessen Gummimaterial, z. B. im Bereich seiner Lauffläche, ein Reifensensormodul nach einem der vorherigen Ansprüche einvulkanisiert ist.

13. Verfahren zum Herstellen eines Reifensensormoduls nach einem der vorherigen Ansprüche, mit mindestens folgenden Schritten:
Herstellung eines Gehäuses (2) oder Gehäuseteils (2a), in dessen Gehäusematerial oder an dessen Gehäuseseite eine Antenne (14, 24) ausgebildet ist (S1, S2, S3),
Einsetzen eines Schaltungsträgers (6) mit mindestens einem Sensorelement (7) in das Gehäuse (2) oder einen Gehäuseteil (2a) unter Kontaktierung der Antenne (14, 24) mit dem Schaltungsträger (6) (S4).

14. Verfahren nach Anspruch 13, **dadurch gekennzeichnet, dass** die Herstellung des Gehäuses mit Antenne (14) mindestens folgende Schritte aufweist:
Herstellung des Gehäuses (2) oder Gehäuseteils (2a) aus einem laseraktivierbaren Kunststoff (S1),
Belichtung einer Gehäuseseite (16) mittels eines Lasers (S2),
nasschemisches Aufbringen der Antenne (14) als Metallschicht auf der Gehäuseseite (16) (S3).

15. Verfahren nach Anspruch 13, **dadurch gekennzeichnet, dass** die Herstellung des Gehäuses mit Antenne (24) mindestens folgende Schritte aufweist:
Einlegen der Antenne (24) als metallisches Einlegeteil in ein Spritzgusswerkzeug,
Spritzen eines Gehäuses oder Gehäuseteils (2a) um die Antenne (24) herum (S8).

16. Verfahren nach einem der Ansprüche 13 bis 15, **dadurch gekennzeichnet, dass** die Antenne (14, 24) mit dem Schaltungsträger (6) mittels einer leitfähigen Klebeverbindung (12), die zwischen dem Schaltungsträger (6) und dem Gehäuse (2) ausgebildet wird, kontaktiert wird.

17. Verfahren nach einem der Ansprüche 13 bis 15, **dadurch gekennzeichnet, dass** die Antenne (14, 24) mit dem Schaltungsträger (6) mittels einer Klemmverbindung und/oder Einpressverbindung und/oder Druckkontaktverbindung, die zwischen dem Schaltungsträger (6) und dem Gehäuse (2) ausgebildet wird, kontaktiert wird.

18. Verfahren nach einem der Ansprüche 13 bis 15, **dadurch gekennzeichnet, dass** die Antenne (14, 24) mit dem Schaltungsträger (6) kontaktfrei verbunden wird.

## Claims

1. Tyre sensor module, which comprises:
a circuit carrier (6), on or in which at least one sensor element (7) for measuring a measured variable is mounted,
an antenna (14, 24) for emitting sensor signals (RF2) to a receiving unit of the vehicle, and
a housing (2), in the interior housing chamber (4) of which the circuit carrier (6) is received,
wherein the antenna (14, 24) is formed in the housing material of the housing (2) or on a housing side (16) of the housing (2),
**characterized in that**
the housing (2) is of a rotationally symmetrical form and the antenna (14, 24) extends in the circumferential direction of the housing (2).

2. Tyre sensor module according to Claim 1, **characterized in that** the antenna (14) is formed on the interior housing side (16).

3. Tyre sensor module according to Claim 1 or 2, **characterized in that** at least a part of the housing (2) is produced from a laser-activatable plastic and the antenna (14) is formed on a housing side (16) by means of a laser direct structuring process.

4. Tyre sensor module according to one of Claims 1 to 3, **characterized in that** the antenna (14) is formed as an antenna metal layer.

5. Tyre sensor module according to Claim 1, **characterized in that** the antenna (24) is received as a metallic inlay part in the housing material of the housing (2).

6. Tyre sensor module according to Claim 1, **characterized in that** the antenna (14, 24) is screw-like or helical with multiple turns.

7. Tyre sensor module according to one of the preceding claims, **characterized in that** the antenna (14, 24) is in contact with the circuit carrier (6) by means of a conductive adhesive bond (12) and/or by a pressure contact and/or a pressing-in or clamping connection between the circuit carrier (6) and the housing (2).

8. Tyre sensor module according to one of Claims 1 to 6, **characterized in that** the circuit carrier (6) is connected to the antenna (14, 24) without contact by means of a capacitive or inductive antenna connection (18).

9. Tyre sensor module according to one of the preceding claims, **characterized in that** one or more sensor elements (7) for measuring at least one of the following measured variables are provided on or in the circuit carrier (6):
pressure, temperature, acceleration.

10. Tyre sensor module according to one of the preceding claims, **characterized in that** it triggers as a transponder, wherein the antenna (14, 24) is intended for receiving enquiry signals (RS1) and emitting sensor signals (RS2) formed from measuring signals of the at least one sensor element (7).

11. Tyre sensor module according to one of the preceding claims, **characterized in that** it is introduced, for example vulcanized, into the rubber material (20) of a tyre (30), in particular in the region of the tread.

12. Vehicle tyre, in the rubber material of which a tyre sensor module according to one of the preceding claims is vulcanized in, for example in the region of its tread.

13. Method for producing a tyre sensor module according to one of the preceding claims, with at least the following method steps:
producing a housing (2) or housing part (2a), in the housing material of which or on the housing side of which an antenna (14, 24) is formed (S1, S2, S3),
inserting a circuit carrier (6) with at least one sensor element (7) into the housing (2) or a housing part (2a) so as the antenna (14, 24) is in contact with the circuit carrier (6) (S4).

14. Method according to Claim 13, **characterized in that** the production of the housing with the antenna (14) comprises at least the following steps:
producing the housing (2) or housing part (2a) from a laser-activatable plastic (S1),
exposing a housing side (16) by means of a laser (S2),
applying the antenna (14) as a metal layer in a wet-chemical manner onto the housing side (16) (S3).

15. Method according to Claim 13, **characterized in that** the production of the housing with the antenna (24) comprises at least the following steps:
inserting the antenna (24) as a metallic inlay part in an injection moulding tool;
injection moulding a housing or housing part (2a) around the antenna (24) (S8).

16. Method according to one of Claims 13 to 15, **characterized in that** the antenna (14, 24) is in contact with the circuit carrier (6) by means of a conductive adhesive bond (12), which is formed between the circuit carrier (6) and the housing (2).

17. Method according to one of Claims 13 to 15, **characterized in that** the antenna (14, 24) is in contact with the circuit carrier (6) by means of a clamping connection and/or a pressing-in connection and/or a pressure-contact connection that is formed between the circuit carrier (6) and the housing (2).

18. Method according to one of Claims 13 to 15, **characterized in that** the antenna (14, 24) is connected to the circuit carrier (6) without contact.

## Revendications

1. Module capteur de pneu qui présente :
un porte-circuit (6) sur ou dans lequel est monté au moins un élément de détection (7) pour mesurer une grandeur de mesure,
une antenne (14, 24) pour émettre des signaux de capteur (RF2) à un dispositif de réception du véhicule,
et
un boîtier (2) dans l'espace intérieur de boîtier (4) duquel est logé le porte-circuit (6),
l'antenne (14, 24) étant configurée dans le matériau de boîtier du boîtier (2) ou sur un côté de boîtier (16) du boîtier (2),
**caractérisé en ce que**
le boîtier (2) est configuré en symétrie rotationnelle et l'antenne (14, 24) s'étend dans le sens circonférentiel du boîtier (2).

2. Module capteur de pneu selon la revendication 1, **caractérisé en ce que** l'antenne (14) est configurée sur le côté intérieur de boîtier (16).

3. Module capteur de pneu selon la revendication 1 ou 2, **caractérisé en ce qu'**au moins une partie du boîtier (2) est fabriquée dans une matière plastique activable par laser et l'antenne (14) est configurée sur un côté de boîtier (16) au moyen d'un procédé de structuration directe par laser.

4. Module capteur de pneu selon l'une des revendications 1 à 3, **caractérisé en ce que** l'antenne (14) est réalisée sous la forme d'une couche métallique d'antenne.

5. Module capteur de pneu selon la revendication 1, **caractérisé en ce que** l'antenne (24) est accueillie dans le matériau de boîtier du boîtier (2) en tant que pièce incorporée métallique.

6. Module capteur de pneu selon la revendication 1, **caractérisé en ce que** l'antenne (14, 24) est configurée en forme de vis ou en forme d'hélice avec plusieurs spires.

7. Module capteur de pneu selon l'une des revendications précédentes, **caractérisé en ce que** l'antenne (14, 24) est mise en contact avec le porte-circuit (6) au moyen d'une liaison collée conductrice (12) et/ou par un contact de pression et/ou une liaison par enfoncement ou serrage entre le porte-circuit (6) et le boîtier (2).

8. Module capteur de pneu selon l'une des revendications 1 à 6, **caractérisé en ce que** le porte-circuit (6) est relié sans contact avec l'antenne (14, 24) au moyen d'une liaison d'antenne (18) capacitive ou inductive.

9. Module capteur de pneu selon l'une des revendications précédentes, **caractérisé en ce que** sur ou dans le porte-circuit (6) sont prévus un ou plusieurs éléments de détection (7) pour mesurer au moins l'une des grandeurs de mesure suivantes :
pression, température, accélération.

10. Module capteur de pneu selon l'une des revendications précédentes, **caractérisé en ce qu'**il se déclenche comme un transpondeur, l'antenne (14, 24) étant prévue pour l'acquisition de signaux d'interrogation (RS1) et l'émission de signaux de détecteur (RS2) formés à partir des signaux de mesure de l'au moins un élément de détection (7).

11. Module capteur de pneu selon l'une des revendications précédentes, **caractérisé en ce qu'**il est logé dans le caoutchouc (20) d'un pneu (30), par exemple incorporé par vulcanisation, notamment dans la zone de la surface de roulement.

12. Pneu de véhicule dans le caoutchouc duquel, par exemple dans la zone de sa surface de roulement, est incorporé par vulcanisation un module capteur de pneu selon l'une des revendications précédentes.

13. Procédé de fabrication d'un module capteur de pneu selon l'une des revendications précédentes, comprenant au moins les étapes suivantes :
fabrication d'un boîtier (2) ou d'une partie de boîtier (2a) dans le matériau de boîtier duquel/de laquelle ou
sur le côté de boîtier duquel/de laquelle est configurée une antenne (14, 24) (S1, S2, S3),
introduction d'un porte-circuit (6) muni d'au moins un élément de détection (7) dans le boîtier (2) ou une partie de boîtier (2a) en mettant l'antenne (14, 24) en contact avec le porte-circuit (6) (S4).

14. Procédé selon la revendication 13, **caractérisé en ce que** la fabrication du boîtier avec l'antenne (14) présente au moins les étapes suivantes :
fabrication du boîtier (2) ou de la partie de boîtier (2a) à partir d'une matière plastique activable par laser (S1),
illumination d'un côté de boîtier (16) au moyen d'un laser (S2),
application par procédé chimique humide de l'antenne (14) sous la forme d'une couche métallique sur le côté de boîtier (16) (S3).

15. Procédé selon la revendication 13, **caractérisé en ce que** la fabrication du boîtier avec l'antenne (24) présente au moins les étapes suivantes :
introduction de l'antenne (24) sous la forme d'une pièce incorporée métallique dans un outil de moulage par injection,
injection d'un boîtier ou d'une partie de boîtier (2a) autour de l'antenne (24) (S8).

16. Procédé selon l'une des revendications 13 à 15, **caractérisé en ce que** l'antenne (14, 24) est mise en contact avec le porte-circuit (6) au moyen d'une liaison collée conductrice (12) qui est formée entre le porte-circuit (6) et le boîtier (2).

17. Procédé selon l'une des revendications 13 à 15, **caractérisé en ce que** l'antenne (14, 24) est mise en contact avec le porte-circuit (6) au moyen d'une liaison par serrage et/ou d'une liaison par enfoncement et/ou d'une liaison par contact de pression entre le porte-circuit (6) et le boîtier (2).

18. Procédé selon l'une des revendications 13 à 15, **caractérisé en ce que** l'antenne (14, 24) est reliée sans contact avec le porte-circuit (6).
